Europäisches Patentamt

European Patent Office

Office européen des brevets

(19)

(11) Veröffentlichungsnummer: **0 185 863**
**B1**

(12) **EUROPÄISCHE PATENTSCHRIFT**

(45) Veröffentlichungstag der Patentschrift:
03.05.89

(21) Anmeldenummer: 85112833.0

(22) Anmeldetag: 10.10.85

(51) Int. Cl.⁴: **B 29 D 7/01,** B 29 C 47/14,
B 29 C 47/86 // B29L7:00

(54) Verfahren zur Herstellung von Folien, insbesondere auf der Basis von Polyvinylbutyral mit geringer Oberflächenklebrigkeit.

(30) Priorität: 24.12.84 US 685404

(43) Veröffentlichungstag der Anmeldung:
02.07.86 Patentblatt 86/27

(45) Bekanntmachung des Hinweises auf die Patenterteilung:
03.05.89 Patentblatt 89/18

(84) Benannte Vertragsstaaten:
AT BE CH DE FR GB IT LI LU NL SE

(56) Entgegenhaltungen:
AT-A- 292 293
AT-B- 288 683
GB-A- 986 160
GB-A- 1 271 188
US-A- 2 004 500
US-A- 2 148 062
US-A- 2 327 627
US-A- 2 702 408
US-A- 2 909 810
US-A- 3 060 512
US-A- 3 074 106
US-A- 3 423 274
US-A- 3 870 454
US-A- 4 035 549
US-A- 4 217 322
US-A- 4 332 543
US-A- 4 476 075

(73) Patentinhaber: Hüls Troisdorf Aktiengesellschaft,
Postfach 11 65, D-5210 Troisdorf (DE)

(72) Erfinder: Pabst, Horst, Eisenachstrasse 80, D-5205 St.
Augustin-Hangelar (DE)

ACTORUM AG

## Beschreibung

Verfahren zur Herstellung von Folien, insbesondere auf der Basis von Polyvinylbutyral mit geringer Oberflächenklebrigkeit.

Die Erfindung bezieht sich auf ein Verfahren zur Herstellung von Folien auf der Basis von Polyvinylbutyral oder von Polymeren mit ähnlichen Eigenschaften mit geringer Oberflächenklebrigkeit durch Extrusion mit einem Breitschlitzwerkzeug.

Soweit in dieser Anmeldung der Begriff Polyvinylbutyral (PVB) verwendet wird, sollen damit gleichzeitig auch diejenigen Polymere eingeschlossen werden, die ähnliche Eigenschaften in bezug auf ihre Verwendbarkeit haben wie (weichmacherhaltiges) Polyvinylbutyral. Hierzu gehören, beispielsweise Ethylenvinylacetat oder bestimmte andere Ethylen-Copolymere. Als relevante Eigenschaften werden hier insbesondere die Klebrigkeit der Oberfläche, die Weichheit und die Gummielastizität bei Raumtemperatur angesehen.

Weichmacherhaltige Folien auf der Basis von Polyvinylbutyral (PVB) dienen z. B. zur Herstellung von Sicherheitsverbundgläsern. Sie sind bereits bei Raumtemperatur ungewöhnlich weich und klebrig. Die hohe Klebrigkeit ist zwar unerläßlich für den Zusammenhalt des Verbundes Glas-Folie-Glas in Sicherheitsverbundgläsern, für den Verarbeitungsprozeß zu diesen Gläsern muß die Klebrigkeit jedoch vorübergehend beseitigt werden. Nach den bekannten Extrusionsverfahren entstehen im allgemeinen PVB-Folien mit glatten und klebrigen Oberflächen, die eine direkte Verwendung der Folien zur Verbundglaserzeugung ausschließen.

Es sind verschiedene großtechnische Verfahren bekannt, die Oberflächenklebrigkeit durch Aufrauhen bzw. durch Bilden von gleichmäßig verteilten Vertiefungen in der Oberfläche temporär zu eliminieren.

Ein älteres Verfahren (DE-AS 1042890, US-PS 2909810, US-PS 2904844) beruht auf der Zugabe von ca. 0,6 bis 15% nicht löslicher, flüchtiger Zusätze – z. B. Wasser – zu dem Polyvinylbutyral oder Polyvinylacetat vor der Extrusion. Während der Extrusion werden diese Zusätze unter dem hohen Extrusionsdruck zwangsläufig in flüssiger Phase gehalten; nach dem Verlassen der Düse expandieren diese Zusätze schlagartig – quasi explosionsartig – zu Dampf und reißen dabei die Oberfläche der Folie auf. Dieses Verfahren hat den Nachteil, daß die Folie eine sehr ungleichmäßige, hinterschnittene Oberfläche aufweist, die für die Weiterverarbeitung zu Verbundglasscheiben nur mit Einschränkungen verwendet werden kann. Aus diesem Grunde wurden diese Verfahren durch spezielle Prägeverfahren abgelöst.

Zur Erzielung einer aufgerauhten Oberfläche mit einer weichmacherhaltigen PVB-Folie schlägt z. B. die US-PS 4035549 ein Prägeverfahren vor, bei dem mittels aufgerauhter Kalanderwalzen (in Luft) unter Wärmeeinwirkung eine rauhe Oberflächenstruktur der Folie erzeugt werden soll. Bei diesem Verfahren ist es jedoch sehr schwierig, die Folien wegen ihrer hohen Klebrigkeit von den Kalanderwalzen einwandfrei abzulösen. Durch ungleichmäßiges Ablösen kommt es zu Falten und Wellen in der Folie. Aus diesem Grunde werden bei diesem Verfahren nicht beide Folienseiten gleichzeitig aufgerauht bzw. strukturiert, sondern nacheinander. Beim Erwärmen der Folie für die Strukturierung der zweiten Oberfläche wird jedoch durch die thermische Rückstellung die erzielte Oberflächenrauhung der ersten Seite der Folie z. T. wieder aufgehoben.

Der Nachteil des starken Klebens auf der Folie auf den Kalanderwalzen wird durch ein anderes bekanntes Verfahren aufgehoben, das in der Britischen Patentschrift 1271188 beschrieben ist. Hierbei werden die Mattierwalzen für die Erzielung der Oberflächenrauhigkeit der Folie in einem auf mindestens 80 °C erwärmten Wasserbad gehalten. Bei diesem Verfahren werden Gummi-Mattierwalzen eingesetzt. Durch den Wasserfilm wird ein Ankleben der Folie auf den Oberflächen der Mattierwalzen vermieden, weshalb auch beide Folienseiten gleichzeitig aufgerauht werden können. Bei diesem Verfahren können jedoch z. B. bei einer zu hohen Pressung der Gummi-Mattierwalzen Friktionen in der Oberfläche der Folie entstehen, wobei diese dann hinterschnittene Aufrauhungen bilden können. Solche Hinterschneidungen führen bei der weiteren Verarbeitung der PVB-Folien zu Lufteinschlüssen im Sicherheitsverbundglas. PVB-Folien mit hinterschnittenen Aufrauhungen sind deshalb nicht brauchbar.

Der Erfindung liegt die Aufgabe zugrunde, ein gattungsgemäßes Verfahren, mit dem Folien auf der Basis von z. B. Polyvinylbutyral mit geringer Oberflächenklebrigkeit hergestellt werden können, dahingehend zu verbessern, daß ein anschließendes Prägen mit den dadurch auftretenden Nachteilen entfällt. Gleichzeitig soll die Folie die Verwendung in Sicherheitsverbundscheiben dadurch begünstigen, daß Lufteinschlüsse beim späteren Verpressen zu Verbundscheiben vermieden werden.

Diese Aufgabe wird erfindungsgemäß durch die im kennzeichnenden Teil des Anspruchs 1 angegebenen Merkmale gelöst.

Die Erfindung nutzt dabei einerseits die Abhängigkeit der Viskosität von der Temperatur der Schmelze und andererseits die begrenzte Temperaturleitfähigkeit der Schmelze aus. Durch eine plötzliche Abkühlung des Schmelzestromes durch die entsprechend temperierten Wandungen des Breitschlitzwerkzeuges, insbesondere im Bereich des Lippenaustrittsspaltes, wird die Oberfläche des Schmelzestromes entsprechend schnell abgekühlt, während der Kern der Schmelze, also die Folienmitte, noch eine höhere Temperatur aufweist. Entsprechend dieser Temperaturdifferenz ist auch die Viskosität des Schmelzestromes im Kern geringer als an der Oberfläche. Hierdurch kommt es im Kern zu einer höheren Fließgeschwindigkeit als an der Oberfläche des erstarrenden Schmelzestromes. Diese Scherung des Schmelzestromes bewirkt ein Aufrauhen der Folienoberfläche. Es hat sich herausgestellt, daß eine erfindungsgemäß hergestellte, weichmacherhaltige PVB-Folie auch ohne Nachbehandlung eine geringe Oberflächenklebrigkeit aufweist. Die so erzeugten Folien weisen eine gleichmäßig aufgerauhte Oberfläche ohne Unterschneidungen auf, die sich vorzüglich zur Weiterverarbeitung z.B. in Sicherheitsglasverbundscheiben eignen.

Die durch das erfindungsgemäße Verfahren erzeugte Aufrauhung und Mattierung auf beiden Seiten der Folie wird beim späteren Verpressen zum Verbundglas wieder glatt und transparent. Die gleichmäßige Mattierung begünstigt dabei das Entweichen von Luft zwischen der Folie und dem Glas während des Verpressens, so daß mit der erfindungsgemäßen Folie Verbundgläser ohne Lufteinschlüsse hergestellt werden können.

Bei der weiteren Verarbeitung von Folien zu Verbundglasscheiben werden die Glasscheiben zusammen mit der eingelegten Folie unter Wärmeeinwirkung zu einem sogenannten «Vorverbund» verpreßt. Es hat sich überraschend herausgestellt, daß die Temperatur, die für den Vorverbund benötigt wird, bei einer erfindungsgemäß hergestellten Folie erheblich niedriger liegen kann als bei einer Folie aus dem gleichen Material, die nach den bekannten Verfahren hergestellt wurde.

So benötigt eine erfindungsgemäß hergestellte Folie eine Vorverbundtemperatur von ca. 60 °C, während eine Folie aus dem gleichen Material, die nach dem Verfahren gemäß dem Britischen Patent 1 271 188 hergestellt wurde, eine Vorverbundtemperatur von ca. 80 °C benötigt.

Diese Aufrauhung weist bei einer geringen Temperaturdifferenz zum übrigen Breitschlitzwerkzeug nur eine geringe Rauhtiefe und bei höherer Temperaturdifferenz eine größere Rauhtiefe auf.

Für das erfindungsgemässe Verfahren können insbesondere alle weichgemachten Polyvinylbutyrale eingesetzt werden, die zur Herstellung von Verbundsicherheitsglasfolien verwendet werden können. Es sind dies insbesondere Polymere mit einem Gehalt an Vinylalkoholeinheiten von 10 bis 30 Gew.-%, vorzugsweise 15 bis 25 Gew.-% und ggf. bis zu 10 Gew.-%, üblicherweise jedoch weniger als 5 Gew.-% von Acetateinheiten gemessen als Polyvinylacetat.

Prinzipiell können alle mit Polyvinylbutyral verträglichen Weichmacher oder Weichmachergemische verwendet werden. Handelsübliche Weichmacher und ihre Verträglichkeit mit Polyvinylbutyral sind beispielsweise in der Modern Plastics Enzyclopädie 1981–1982 auf den Seiten 710 bis 719 aufgeführt. Beispiele für besonders geeignete Weichmacher sind die Ester von aliphatischen Diolen mit aliphatischen Carbonsäuren, insbesondere die Ester des Di-, Tri- und Tetraethylenglykols mit aliphatischen Carbonsäuren mit 6 bis 10 Kohlenstoffatomen, z.B. 2-Butylbuttersäure und N-Heptansäure, ferner die Ester von Dicarbonsäuren, wie Adipin-, Sebazin- oder Phthalsäure mit aliphatischen Alkoholen mit 4 bis 8 Kohlenstoffatomen, wie Dihexyladiphat, Dibutylphthalat oder Dihexylphthalat, ferner Phosphorsäureester, wie Tricresylphosphat oder Trioctylphosphat sowie Gemische aus verschiedenen dieser Weichmacher, z.B. aus Phthalsäure- und Adipinsäureestern.

Die Weichmacher werden in den üblichen Mengen eingesetzt, d.h. die Polyvinylbutyral-Weichmachergemische können 15 bis 50 Gew.-%, vorzugsweise 25 bis 40 Gew.-%, Weichmacher enthalten.

Dem Polyvinylbutyral-Weichmachergemisch können übliche Zusätze wie UV-Stabilisatoren, Pigmente bzw. Farbstoffe, Antioxidantien, Flammschutzmittel und andere Zusätze wie z.B. geringe Mengen an Alkali, z.B. 0,001 bis 0,1% Alkalihydroxid oder alkalisch reagierendes Alkalisalz, ferner bekannte Antihaftmittel, z.B. Salze von Carbonsäuren, insbesondere Kalium- und Magnesiumsalze der Ameisensäure bzw. der Essigsäure oder Salze von Dicarbonsäuren sowie Lecitin oder Betaine zugegeben werden. Die Konzentration an diesen Antihaftmitteln liegt beispielsweise zwischen 0,001 und 0,2 Gew.-%. Als UV-Stabilisatoren kommen beispielsweise Benzotriazolderivate in Frage sowie weitere Mittel zur Verminderung der Klebrigkeit, wie beispielsweise Montansäureester in Konzentrationen von beispielsweise 0,1 bis 2 Gew.-%. Die Angaben in Gew.-% sind jeweils bezogen auf die Menge Polyvinylbutyral und Weichmacher.

Für die Durchführung des erfindungsgemäßen Verfahrens wird die thermoplastische Schmelze bevorzugt mit einer Massetemperatur im Bereich von 220 °C plastifiziert und mit dieser Temperatur in das Breitschlitzwerkzeug eingespeist. Die Massetemperatur nimmt dann beim Eintritt in das Breitschlitzwerkzeug die Temperatur des Breitschlitzwerkzeuges an und durchströmt das Breitschlitzwerkzeug vorzugsweise mit einer konstanten Temperatur, bis es dann im Lippenaustrittsspalt gemäß der Erfindung praktisch schockartig weiter abgekühlt wird und damit die gewünschte Oberflächenrauhigkeit der aus dem Breitschlitzwerkzeug austretenden Folie erzielt wird.

Nach einer Ausführung der Erfindung wird der Bereich des Lippenaustrittsspaltes des Breitschlitzwerkzeuges auf eine Temperatur im Bereich von 100 bis 180 °C temperiert.

Nach der Erfindung können vorteilhaft PVB-Folien in einer Dicke zwischen 0,36 und 0,76 mm sowie bevorzugt einer Breite von 2 bis 3,5 m extrudiert werden. Der Austrittsspalt hat eine Breite und Höhe entsprechend den Dimensionen des Werkzeugs. Die Länge des Austrittsspalts in Strömungsrichtung liegt zwischen 1 cm und 3 cm. In diesem Bereich des Breitschlitzwerkzeugs kann die erfindungsgemäße oberflächliche Abkühlung des Schmelzestromes am vorteilhaftesten erfolgen.

Es ist jedoch auch möglich, insbesondere bei großen Breitschlitzwerkzeugen, gemäß einer weiteren Ausbildung der Erfindung, den Bereich des Lippenaustrittsspaltes des Breitschlitzwerkzeuges in zwei Stufen zu temperieren, wobei der Eintrittsbereich des Lippenaustrittsspaltes, d.h. der Bereich, in den die Schmelze zuerst einfließt, auf eine Temperatur im Bereich von z.B. 160 bis 180 °C und der Austrittsbereich des Lippenaustrittsspaltes auf eine Temperatur im Bereich von z.B. 100 bis 160 °C temperiert wird.

Beträgt der Temperaturunterschied δ t zwischen der Temperatur des übrigen Breitschlitzwerkzeuges, beispielsweise 200 °C, und der Temperatur des Lippenaustrittsspaltes, beispielsweise 180 °C, lediglich 20 °C, so wird nur eine sehr geringfügige Aufrauhung der Oberfläche im Bereich weniger μm erzielt. Beträgt hingegen der Temperaturunterschied δ t zwischen der Temperatur des Breitschlitzwerkzeuges und dem Lippenaustrittsspalt 40 °C, so werden bereits Aufrauhungen mit einer Rauhtiefe im Bereich von 25 μm erzielt.

In weiterer Ausbildung der Erfindung wird die beim Austritt der Folie aus dem Breitschlitzwerkzeug erzielte Oberflächenstruktur dadurch fixiert, daß die Folie unmittelbar danach in ein Wasserbad eingeleitet wird, wobei das Wasserbad eine Temperatur im Bereich von 2 bis 40 °C aufweist.

Bevorzugt werden nach dem erfindungsgemäßen Verfahren Folien auf Basis Polyvinylbutyral und Weichmacher hergestellt, wobei zwischen 15 und 50 Gew.-% Weichmacher, bezogen auf das Polyvinylbutyral-Weichmachergemisch enthalten sind, die eine Dicke von 0,38 mm bzw. 0,76 mm aufweisen und eine Rauhtiefe von 20 bis 27 μm auf den Oberflächen erhalten mit einer Breite der Folie von 2 bis 3,5 m. Für die Extrusionsgeschwindigkeit solcher Folien wird bevorzugt zwischen 5 bis 20 m/min gewählt.

Die Erfindung wird nachfolgend an einem Ausführungsbeispiel und Zeichnungen näher erläutert.

Es zeigen:

Fig. 1 schematisch eine Anlage zum Durchführen des erfindungsgemäßen Verfahrens;

Fig. 2 einen schematischen Querschnitt durch das Breitschlitzwerkzeug der Anlage nach Fig. 1;

Fig. 3 einen Schnitt durch das Unterteil des Breitschlitzwerkzeuges nach der Linie DD in Fig. 2;

Fig. 4 eine schematische Darstellung des Temperaturverlaufes innerhalb des Breitschlitzwerkzeuges;

Fig. 5 ein Ausführungsbeispiel für eine Temperatureinrichtung der Breitschlitzdüse 1, um den Temperaturbereich gemäß der Erfindung, beispielsweise gemäß Fig. 4, zu erreichen.

Die Düse 1 wird z.B. im Lippenaustrittsbereich 13 durch die Kanäle 3 und 2, durch die erhitztes Öl fliesst, temperiert. Die Temperatur dieses erhitzten Öls wird kontrolliert und reguliert durch die Kontrolleinrichtung 20a, b und 30a, b, und zwar jeder Kanal separat für sich. Die übrigen Teile der Düse werden ebenfalls temperiert durch erhitztes Öl, welches durch die Kanäle 111 fließt, und kontrolliert und reguliert durch die Kontrolleinrichtung 100.

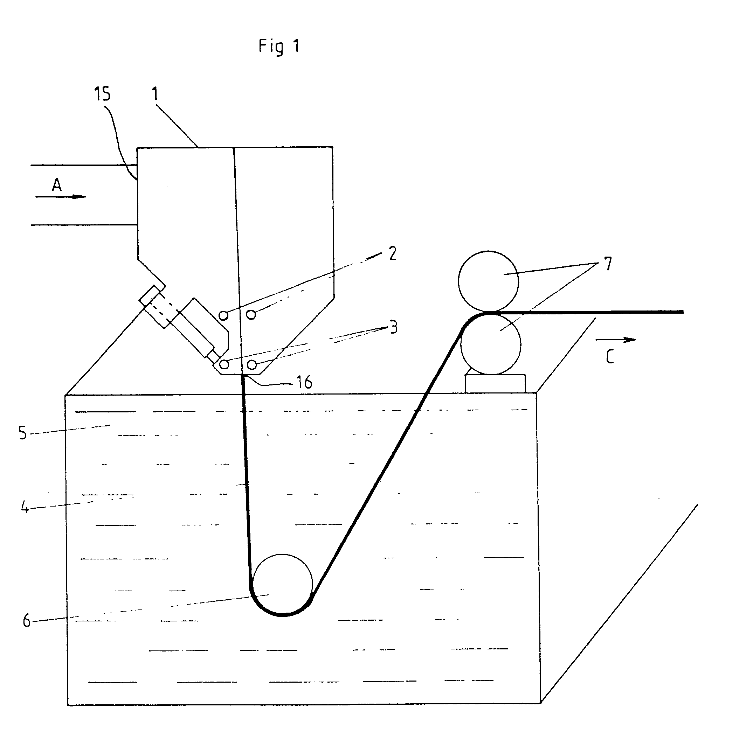

In Fig. 1 ist an einem Ausführungsbeispiel der Erfindung schematisch dargestellt, wie die aus dem nicht gezeigten Extruder kommende thermoplastische Schmelze A auf Basis Polyvinylbutyral in das Breitschlitzwerkzeug 1 im Bereich 15 eingeführt wird. Sie verläßt das Breitschlitzwerkzeug 1 am Düsenaustritt 16 als Folie 4. Da die Folie 4 unmittelbar nach dem Verlassen des Breitschlitzwerkzeuges in ein Wasserbad zum Abkühlen eingeführt wird, ist es zweckmäßig, wie in Fig. 1 dargestellt, das Werkzeug mit dem Düsenaustritt senkrecht direkt über der Wasseroberfläche des Wasserbades 5 anzuordnen. Das Wasser des Wasserbades hat bevorzugt eine Temperatur zwischen 2 und 40 °C. Die Folie 4 wird im ersten Teil senkrecht durch das Wasserbad geführt und dann über eine Umlenkwalze 6 wieder aus dem Wasserbad herausgeführt und über ein Walzenpaar 7 abgezogen. Das Walzenpaar 7 ist bevorzugt mit Gummiwalzen ausgebildet, wobei ein leichtes Abpressen der bereits erstarrt aus dem Wasserbad 5 austretenden Folie 4 beim Abziehen in Pfeilrichtung C erfolgt. Zur Durchführung der erfindungsgemäßen Oberflächenbehandlung der in dem Breitschlitzwerkzeug 1 geformten Folie sind im Bereich des Düsenaustrittes in dem Breitschlitzwerkzeug 1 Kanäle 2 und 3 angeordnet, durch welche ein Temperiermedium, beispielsweise Öl, geführt ist. Mit diesem Temperiermedium kann die Temperatur des Breitschlitzwerkzeuges in diesem Bereich eingeregelt werden. Das gesamte Breitschlitzwerkzeug 1 ist des weiteren beispielsweise über eine elektrische Widerstandsheizung einheitlich heizbar, die jedoch im einzelnen nicht dargestellt ist.

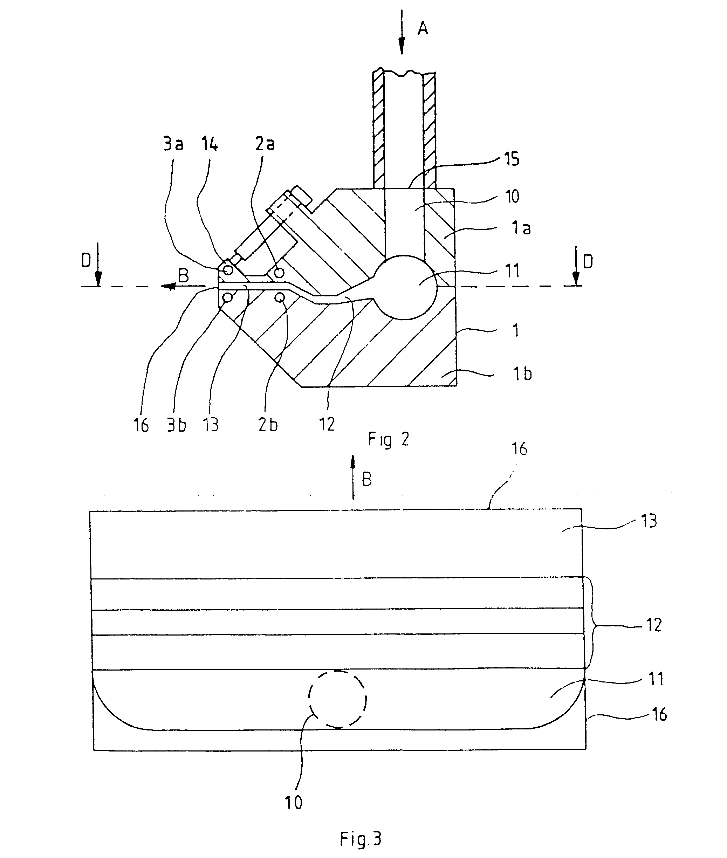

In der Fig. 2 ist im Querschnitt der prinzipielle Aufbau und die Gestaltung des Breitschlitzwerkzeuges 1 näher dargestellt. Das Breitschlitzwerkzeug 1 besteht aus dem Oberteil 1a und dem Unterteil 1b, die mittels nicht dargestellter Schrauben fest miteinander verbunden werden. Das Oberteil 1a und das Unterteil 1b bestehen aus Metall und enthalten nicht näher dargestellte Heizvorrichtungen, mit denen das gesamte Werkzeug auf eine Temperatur im Bereich zwischen 160 und 200 °C geheizt wird. Im Bereich der Berührungsflächen des Oberteils 1a und des Unterteils 1b ist der Strömungskanal für die thermoplastische Schmelze A eingearbeitet. Da das Breitschlitzwerkzeug, wie in Fig. 1 dargestellt, mit senkrechtem Austritt der Folie vorgesehen ist, erfolgt die Einspeisung der thermoplastischen Schmelze A um 90° versetzt über den Eintrittsbereich 15 und den Einspeisekanal 10 auf den Verteilerkanal 11 des Breitschlitzwerkzeuges. An den Verteilerkanal 11 schließt sich dann das Drosselfeld 12 und der Lippenaustrittsspalt 13, in dem die thermoplastische Schmelze bereits parallel entsprechend der gewünschten, zu extrudierenden Foliendicke geführt wird, an. Der Lippenaustrittsspalt 13 wird beidseitig von den Wandungen des Oberteils 1a und des Unterteils 1b des Breitschlitzwerkzeuges begrenzt. Hierbei ist üblicherweise die obere Wandung zumindest im vorderen Bereich verstellbar ausgebildet, hier als Düsenlippe 14 bezeichnet, um die Foliendicke zu regeln.

Im Bereich des Lippenaustrittsspaltes 13 sind in dem Oberteil 1a und dem Unterteil 1b des Breitschlitzwerkzeuges parallel zum Düsenaustritt 16 die Kanäle 2a, 3a und 2b, 3b jeweils einander paarweise gegenüberliegend angeordnet. Diese Kanäle 2a, 2b, 3a, 3b werden mit einem erwärmten Medium, beispielsweise Öl beschickt. Jedes Kanalpaar 2a, 2b bzw. 3a, 3b ist mit einem separaten Ölkreislauf verbunden, dessen Temperatur auf die gewünschte Temperatur erwärmt und geregelt werden kann. Die in dem Breitschlitzwerkzeug 1 beim Durchlaufen der Strömungskanäle geformte Schmelze A verläßt als Folie das Breitschlitzwerkzeug in Pfeilrichtung B beim Düsenaustritt 16.

In der Fig. 3 ist nochmals schematisch der Strömungsweg der Schmelze in der Aufsicht BD auf das Unterteil 1b des Breitschlitzwerkzeuges dargestellt. Die über den Einspeisekanal 10 zugeführte Schmelze wird im Verteilerkanal 11 über die gesamte Breite des Breitschlitzwerkzeuges verteilt und umgelenkt und fließt dann durch das Drosselfeld 12, wobei es in mehreren Stufen abschnittsweise zur endgültigen Form geformt wird, in den Lippenaustrittsspalt 13 und verläßt am Düsenaustritt 16 in Pfeilrichtung B das Breitschlitzwerkzeug.

Der Erläuterung der Erfindung dient das folgende Beispiel:

Beispiel 1

Ein zur Herstellung von Folien durch Extrusion geeignetes Polyvinylbutyral enthält 21,0 Gew.-% Vinylalkoholeinheiten und hat in 5%iger Lösung in Ethanol bei 23 °C bei DIN 53015 eine Viskosität von 75 mPas.

Dieses Polymere wird mit 29 Gew.-% (bezogen auf Polymeres + Weichmacher) Triethylenglykolbis-2-ethylbuttersäureester vermischt. Das Gemisch wird in einem Extruder zu einer Folie einer Dicke von 0,76 mm und einer Breite von 2,20 m mit einer Geschwindigkeit von 10 m/min extrudiert. Die Massetemperatur der Polymer-Weichmacherschmelze erreicht dabei maximal ca. 200 °C.

Das Breitschlitzwerkzeug 1 wird im Lippenaustrittsspalt 13 mittels des durch die Kanäle 2a, 2b und 3a, 3b fließenden Temperiermediums, beispielsweise erwärmtes Öl, auf eine bis zu 80 °C niedriger liegende Temperatur als das übrige Breitschlitzwerkzeug temperiert. Das durch die Kanäle 2a, 2b fließende Öl hat eine Temperatur von 170 °C, das durch die Kanäle 3a, 3b fließende Öl hat eine Temperatur von 150 °C. Die durch das Breitschlitzwerkzeug 1 fließende thermoplastische Schmelze, d.h. die Polymer/Weichmacher-Schmelze nimmt die Temperatur des Breitschlitzwerkzeuges an und wird im Bereich des Lippenaustrittsspaltes stufenweise bis auf die Temperatur von 150 °C abgekühlt. Durch dieses Temperaturgefälle vom Breitschlitzwerkzeug mit z.B. 190 °C bis zum Düsenaustritt mit z.B. 150 °C wird die Geschwindigkeit der Polymer/Weichmacher-Schmelze an den Berührungsflächen entlang des Strömungskanals des Breitschlitzwerkzeuges im Bereich des Lippenaustrittsspaltes schockartig abgebremst, so daß eine zusätzliche Differenzgeschwindigkeit im Hinblick auf die in der Mitte des Strömungskanals fließende Schmelze entsteht. Die Oberfläche der Schmelze, die entlang den Wandungen des Breitschlitzwerkzeuges im bereich des Lippenaustrittsspaltes wird dann nicht mehr glatt, sondern aufgerauht ausgebildet. Die Tiefe der Aufrauhung wird dabei bestimmt durch die Temperatur des Temperaturmediums in den Kanälen 2a, 2b und 3a, 3b im Verhältnis zu der Temperatur des übrigen Breitschlitzwerkzeuges, jedoch nahezu unabhängig von der Dicke der extrudierten Folie.

Wird in dem genannten Beispiel das durch die Kanäle 3a, 3b fließende Öl auf einer Temperatur von 150 °C gehalten, so erzielt man eine gleichmäßige Aufrauhung der beiden Oberflächen der extrudierten Folie mit einer Rauhtiefe von 25 µm, wird hingegen die Temperatur des durch die Kanäle 3a, 3b fließenden Öls auf einer Temperatur von 140 °C gehalten, so erreicht man eine Rauhtiefe von 35 µm, und wird die Temperatur des durch die Kanäle 3a, 3b fließenden Öls auf 165 °C gehalten, so wird eine gleichmäßige Rauhtiefe von etwa 15 µm erzielt. Das bedeutet, daß je höher das Temperaturgefälle des Temperiermediums der Kanäle 2a, 2b und 3a und 3b im Verhältnis zum übrigen Breitschlitzwerkzeug ist, desto größer wird die erzielbare Rauhtiefe. Nach dem Verlassen des Breitschlitzdüsenwerkzeuges wird die Folie direkt in ein Wasserbad geleitet, das eine Wassertemperatur von beispielsweise 5 °C hat. Nach dem Erstarren wird die Folie über Umlenkwalzen und ein Walzenpaar aus dem Wasserbad abgezogen.

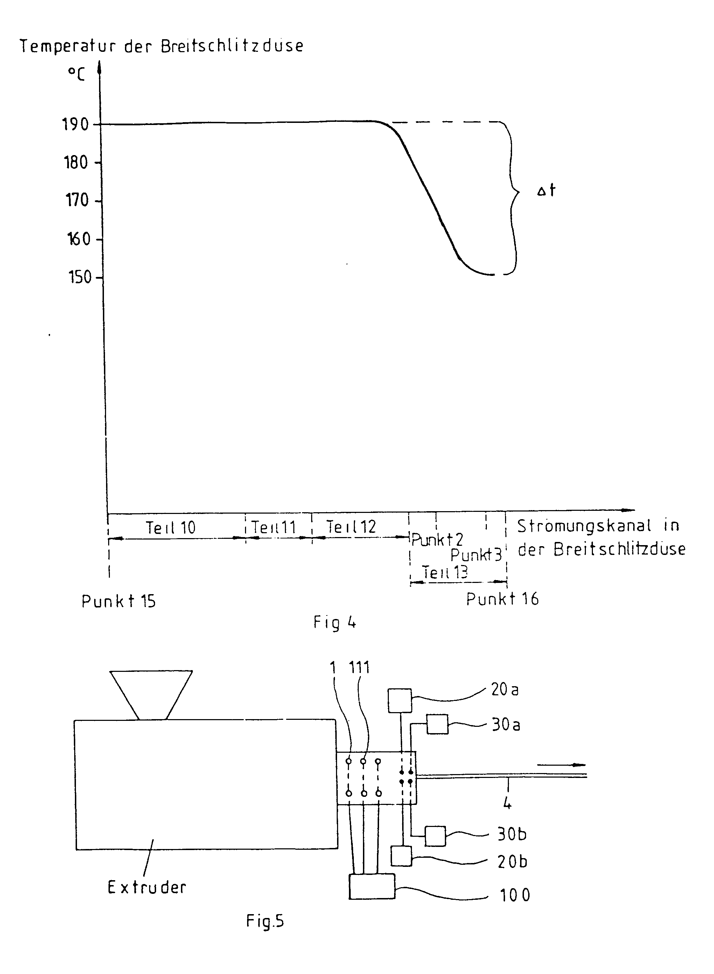

In der Fig. 4 ist der Temperaturverlauf gemäß Beispiel 1 in Breitschlitzdüsenwerkzeug entlang des gesamten Strömungskanals dargestellt. Die durch das Breitschlitzdüsenwerkzeug fließende thermoplastische Schmelze nimmt an ihrer Oberfläche durch die intensive Berührung mit den metallischen Flächen des Breitschlitzwerkzeuges unmittelbar, d.h. sofort, die Temperatur des Breitschlitzwerkzeuges an.

Wie aus der Fig. 4 zu ersehen ist, wird das Breitschlitzwerkzeug über den größten Teil des Strömungskanals, nämlich im Einspeisekanal 10, im Verteilerkanal 11 und im Bereich des Drosselfeldes 12 auf einer konstanten Temperatur, in dem Beispiel 190 °C gehalten. Im Bereich des Lippenaustrittsspaltes 13 wird an zwei Stellen, nämlich im Bereich der Kanäle 2 und der Kanäle 3 in zwei Stufen von 190 °C über 170 °C auf 150 °C abgekühlt. Damit wird die thermoplastische Schmelze auf dieser kurzen Wegstrecke im Bereich des Lippenaustrittsspaltes 13 um eine Temperaturdifferenz von $\delta t = 40$ °C schockartig abgekühlt. Diese relative Abkühlung reicht aus, um die glatte Oberfläche der Folie zu zerstören und die gewünschte gleichmäßige Aufrauhung auf beiden Seiten der extrudierten Folie zu erzielen. Die so hergestellte Folie weist nur eine sehr geringe Klebrigkeit der Oberfläche auf.

Fig. 5 zeigt die Temperatur kontrollierenden Mittel der Breitschlitzdüse 1, um den Temperaturbereich gemäß der Erfindung von beispielsweise Fig. 4 zu erreichen. Die Düse 1 wird z.B. im Lippenaustrittsbereich 13 durch die Kanäle 3 und 2, durch die erhitztes Öl fließt, erwärmt. Die Temperatur dieses erhitzten Öls wird kontrolliert und reguliert durch die Kontrolleinrichtung 20a, b und 30a, b und zwar jeder Kanal separat für sich. Die übrigen Teile der Düse werden ebenfalls erwärmt durch erhitztes Öl, welches durch die Kanäle 111 fließt und kontrolliert und reguliert durch die Kontrolleinrichtung 100.

**Patentansprüche**

1. Verfahren zur Herstellung von Folien (4) mit geringer Oberflächenklebrigkeit aus einer plastifizierten Schmelze (A) auf der Basis von weichmacherhaltigem Polyvinylbutyral oder von Polymeren mit ähnlichen Eigenschaften durch Extrusion mit einem Breitschlitzwerkzeug (1), wobei die plastifizierte Schmelze (A) mit dem Breitschlitzwerkzeug (1) mit Einspeisekanal (10), Verteilerkanal (11) und Austrittsspalt (13) zu einer Folie geformt wird, dadurch gekennzeichnet, daß das Breitschlitzwerkzeug (1) in einem Bereich, der – in Extrusionsrichtung betrachtet – nach dem Verteilerkanal (11) liegt, auf eine um soviel niedriger liegende Temperatur als das übrige Breitschlitzwerkzeug (1) temperiert wird, daß eine Temperaturdifferenz zwischen der Oberfläche und dem Kern des zur Folie geformten Schmelzestromes (A) erzeugt wird, so daß durch die hierdurch entstehende Scherung des erstarrenden Schmelzestromes ein Aufrauhen der Folienoberfläche und damit eine geringere Oberflächenklebrigkeit erreicht wird und daß die aus dem Breitschlitzwerkzeug (1) ausgetretene Folie in ein Wasserbad (5) mit einer Temperatur des Wassers im Bereich von 2 bis 40 °C geführt wird.

2. Verfahren nach Anspruch 1, dadurch gekennzeichnet, daß die Temperatur des nach dem Verteilerkanal (11) liegenden Bereiches des Breitschlitzwerkzeuges (1) um 20 bis 80 K geringer ist als die Temperatur des übrigen Breitschlitzwerkzeuges (1).

3. Verfahren nach Anspruch 1 oder 2, dadurch gekennzeichnet, daß die Oberflächen der Folie (4) mit einer Rauhtiefe von 10 bis 40 μm versehen werden.

4. Verfahren nach einem der Ansprüche 1 bis 3, dadurch gekennzeichnet, daß die Oberflächen der Folie (4) mit einer Rauhtiefe von 20 bis 30 μm versehen werden.

5. Verfahren nach einem der Ansprüche 1 bis 4, dadurch gekennzeichnet, daß die thermoplastische Schmelze bei einer Massetemperatur von 200 bis 250 °C plastifiziert wird.

6. Verfahren nach einem der Ansprüche 1 bis 5, dadurch gekennzeichnet, daß der Bereich des Lippenaustrittsspaltes (14) des Breitschlitzwerkzeuges (1) auf eine Temperatur im Bereich von 100 bis 180 °C temperiert wird.

7. Verfahren nach einem der Ansprüche 1 bis 6, dadurch gekennzeichnet, daß der Bereich des Lippenaustrittsspaltes (14) des Breitschlitzwerkzeuges (1) in zwei Stufen temperiert wird, wobei der Eintrittsbereich des Lippenaustrittsspaltes (14) auf eine Temperatur im Bereich von 160 bis 180 °C und der Austrittsbereich des Lippenaustrittsspaltes (14) auf eine Temperatur im Bereich von 100 bis 160 °C temperiert wird.

8. Verfahren nach einem der Ansprüche 1 bis 7, dadurch gekennzeichnet, daß Folien (4) auf Basis von Polyvinylbutyral und Weichmacher, wobei zwischen 15 bis 50 Gew.-% Weichmacher, bezogen auf das Polyvinylbutyral/Weichmachergemisch, enthalten sind, in einer Dicke von 0,38 mm bzw. 0,76 mm mit einer Rauhtiefe von 20 bis 27 μm auf den Oberflächen bei einer Breite der Folie (4) von 2 m bis 3,50 m hergestellt werden.

9. Verfahren nach einem der Ansprüche 1 bis 8, dadurch gekennzeichnet, daß die Folie (4) mit einer Geschwindigkeit von 5 bis 20 m/min extrudiert wird.

**Claims**

1. Process for the production of foils (4) with low surface adhesivity from a plasticised melt (A) having a plasticiser-containing polyvinylbutyral basis or a basis of polymers with similar properties, by extrusion with a broad slit tool (1), wherein the plasticised melt (A) is shaped with the wide slit tool (1) with input channel (10), distribution channel (11) and outlet gap (13) to form a foil, characterised in that the wide slit tool (1) is subjected in a region which – seen in the extrusion direction – is after the distribution channel (11), to a temperature which is so much lower than the remaining wide slit tool (1) that a temperature difference between the surface and the interior of the flow of melt (A) shaped to the foil is produced so that a roughening of the foil surface and accordingly a low surface adhesivity is produced as a result of the shearing of the solidifying melt flow taking place as a result, and that the foil emerging from the wide slit tool (1) is guided into a water bath (5) with a water temperature in the region of 2 to 40 °C.

2. Process according to claim 1, characterised in that the temperature of the region of the wide slit tool (1) which lies after the distribution channel (11) is about 20 to 80 K less than the temperature of the remaining wide slit tool (1).

3. Process according to claim 1 or 2, characterised in that the surface of the foil (4) are provided with a roughening depth of 10 to 40 μm.

4. Process according to one of claims 1 to 3, characterised in that the surfaces of the foil (4) are provided with a roughening depth of 20 to 30 μm.

5. Process according to one of claims 1 to 4, characterised in that the thermoplastic melt is plasticised at a temperature of the material of 200 to 250 °C.

6. Process according to one of claims 1 to 5, characterised in that the region of the outlet gap lips (14) of the wide slit tool (1) is subjected to a temperature in the region of 100 to 180 °C.

7. Process according to one of claims 1 to 6, characterised in that the region of the outlet gap lips (14) of the wide slit tool (1) is tempered in two steps, wherein the entry region of the outlet gap lip (14) is subjected to a temperature in the region of 160 to 180 °C and the outlet region of the outlet gap lips (14) is subjected to a temperature in the region of 100 to 160 °C.

8. Process according to one of claims 1 to 7, characterised in that foils (4) based on polyvinylbutyral and plasticiser are produced wherein there are between 15 to 50% by weight plasticiser, related to the polyvinylbutyral/plasticiser mixture, the foils having a thickness of 0.38 mm or 0.76 mm with a surface roughening depth of 20 to 27 µm, with a width of foil (4) of 2 mm to 3.5 mm.

9. Process according to one of claims 1 to 8, characterised in that the foil (4) is extruded at a speed of 5 to 20 m/min.

## Revendications

1. Procédé pour la fabrication de feuilles (4) à adhésivité superficielle réduite, à partir d'une masse fondue (A) plastifiée, à base de polyvinylbutyral contenant un plastifiant, ou de polymères ayant des propriétés similaires, par extrusion dans une tête à filière plate (1), la masse fondue (A) plastifiée étant formée en une feuille au moyen de la tête à filière plate (1) munie d'un conduit d'alimentation (10), d'un conduit de répartition (11) et d'une fente sortie (13), caractérisé en ce que la température de la tête à filière plate (1) est ajustée, dans une zone qui – vue dans le sens de l'extrusion – est située après le conduit de réparti-tion (11), à une valeur plus faible que le reste de la tête à filière plate (1), valeur telle qu'une différence de température entre la surface et le cœur du flux de masse fondue (A) formée en feuille soit obtenue, de sorte que le cisaillement ainsi produit du flux de masse fondue en cours de solidification entraîne une rugosité de la surface de la feuille et de ce fait, une faible adhésivité de surface, et ce que que la feuille sortant de la tête filière plate (1) est dirigée dans un bain d'eau (5) ayant une température de l'eau de 2 à 40 °C.

2. Procédé selon la revendication 1, caractérisé en ce que la température de la zone située après le conduit de répartition (11) de la tête à filière plate (1) est inférieure de 20 à 80 K à la température du reste de la tête à filière plate (1).

3. Procédé selon les revendications 1 ou 2, caractérisé en ce que les surfaces de la feuille (4) sont munies d'aspérités d'une hauteur de 10 à 40 µm.

4. Procédé selon l'une quelconque des revendications 1 à 3, caractérisé en ce que les surfaces de la feuille (4) sont munies d'aspérités d'une hauteur de 20 à 30 µm.

5. Procédé selon l'une quelconque des revendications 1 à 4, caractérisé en ce que la masse fondue thermoplastique est plastifiée à une température de la masse de 200 à 250 °C.

6. Procédé selon l'une quelconque des revendications 1 à 5, caractérisé en ce que la zone de la fente de sortie des lèvres (14) de la tête à filière plate (1) est ajustée à une température comprise entre 100 et 180 °C.

7. Procédé selon l'une quelconque des revendications 1 à 6, caractérisé en ce que la température dans la zone de la fente de sortie des lèvres (14) de la tête à filière plate (1) est ajustée en deux étapes, la zone d'entrée de la fente de sortie des lèvres (14) étant ajustée à une température comprise entre 160 et 180 °C, et la zone de sortie de la fente de sortie des lèvres (14) étant ajustée à une temperature comprise entre 100 et 160 °C.

8. Procédé selon l'une quelconque des revendications 1 à 7, caractérisé en ce que les feuilles (4) à base de polyvinylbutyral et de plastifiant, contenant entre 15 et 50% en poids de plastifiant, par rapport au mélange polyvinylbutyral/plastifiant, sont préparées en une épaisseur de 0,38 mm ou 0,76 mm, avec d'aspérités d'une hauteur de 20 à 27 µm à la surface, pour une largeur de la feuille (4) de 2 m à 3,50 m.

9. Procédé selon l'une quelconque des revendications 1 à 8, caractérisé en ce que les feuilles (4) sont extrudées avec une vitesse de 5 à 20 m/min.

Fig 1

Fig 2

Fig.3

Temperatur der Breitschlitzdüse

Fig 4

Fig.5